# EUROPEAN PATENT APPLICATION

(11) **EP 1 267 243 A2**
(43) Date of publication of application: **18.12.2002**
(21) Application number: 02077066.5
(22) Date of filing: 27.05.2002
(51) Int. Cl.: G06F 1/00

(54) **Access to electronic content over a network using a hybrid optical disc for authentication**

(30) Priority: 11.06.2001 US 878532
(71) Applicant: EASTMAN KODAK COMPANY, Rochester, New York 14650 (US)
(72) Inventor: Inchalik, Michael Alan, Eastman Kodak Company, Rochester, NY 14650-2201 (US); Mueller, William James, Eastman Kodak Company, Rochester, NY 14650-2201 (US)
(74) Representative: Parent, Yves

(57) **Abstract**

A method of transferring information from a content supplier from one or more databases, such information including program(s), audio, still, data files, or video, or combinations thereof to a remote location that uses an authorizing hybrid optical disc that permits the use of such transferred information, comprising the steps of: providing an authorizing hybrid optical disc having a ROM portion and a RAM portion; providing the ROM portion to include a preformed identification signature which is impressed into the ROM portion of the disc and is arranged to be difficult for a pirate to copy; providing the RAM portion which includes user-specific encrypted information which personalizes the optical disc for that specific user and in combination with the ROM preformed identification signature provides a user-personalized secure signature; a content supplier authenticating a user using the user-personalized secure signature so as to permit a user to communicate over a network with the content supplier and the user selecting information desired to be downloaded; and downloading the selected information to the user's memory location for use by the user.

## Description

The present invention relates to a method to provide secure access to electronic content over a network.

With the proliferation of computerized equipment on a large scale, it is becoming increasingly easy and common to access data that once required a personal visit to a business or institution. The widespread use of the Internet has allowed users to access all types of information from remote locations. This includes banking and other financial information, online concerts, long-distance learning, online games, and other types of information. This has created a new information distribution model whose characteristics include speed, customer convenience, ease of access, and lower costs. Significant marketing improvements are also possible. For instance, a store can be located in a single location and still be convenient to users throughout the nation or even the world.

With these considerable advantages come some disadvantages due to the ease of access. Primary among these is that the ease of access can allow illicit access to information. While it can take considerable effort to access private information in the traditional manner (for example, one must provide identification to the satisfaction of a clerk), it is easier and takes far less effort for an unscrupulous person to devise an electronic "identification" to access the information. This is of considerable concern to just about everyone who has personal information (for example, banking and financial information, medical records, employment records) in the hands of private and government institutions.

Current methods have problems dealing with this type of information access. An example is the current method used for customer access to banking records over the Internet. Access is generally controlled by the customer giving an account number, which identifies the customer, and by giving a personal identification number (PIN), or a password. Access is only granted if both pieces of information are supplied. The problem with this system is that it is based on a "what you know" security model, with no elements of a "what you have" model. A person who obtains both pieces of information will then have access to the customer's account information. While the PIN is considered private, experience has shown that it is possible for sophisticated thieves to obtain working PINs. Once this information is obtained, it is very easy to promulgate it worldwide so that many people can have access to the customer's records within minutes.

It is therefore an object of the present invention to provide a legitimate user with access to information on a network (for example, allowing the secure transfer of information), such as the Internet, such information including information that the user or the provider wishes to keep restricted to a limited population.

It is a further object of the present invention that the ability to access confidential information by an illegitimate user is significantly protected against.

This object is achieved by a method of transferring information from a content supplier from one or more databases, such information including program(s), audio, still pictures, data files, or video, or combinations thereof to a remote location that uses an authorizing hybrid disc that permits the use of such transferred information, comprising the steps of:
(a) providing an authorizing hybrid optical disc having a ROM portion and a RAM portion;
(b) providing the ROM portion to include a preformed identification signature which is impressed into the ROM portion of the disc and is arranged to be difficult for a pirate to copy;
(c) providing the RAM portion which includes user-specific encrypted information which personalizes the optical disc for that specific user and in combination with the ROM preformed identification signature provides a user-personalized secure signature;
(d) a content supplier authenticating a user using the user-personalized secure signature so as to permit a user to communicate over a network with the content supplier and the user selecting information desired to be downloaded; and
(e) downloading the selected information to the user's memory location for use by the user.

The use of an authorizing hybrid optical disc for accessing online information has advantages for both the information supplier and the user. This is because access security can be based on a "what you have" security model, and can be enhanced with the addition of "what you know" features, including the possibility of user-selectable information.

The information supplier can easily supply the information over a network, such as the Internet, which allows a potential world-wide audience with small overhead. The access to information can be exclusively linked to a particular user, so that an unauthorized user cannot view the information without the authorized user's authorizing disc. The supplier can supply confidential information, if there is a need, through the use of authorizing discs that can give the user access to this information, but the user cannot distribute this access to others without also providing the single authorizing disc.

Further, if access to restricted information is lost or stolen, the individual access of that particular disc can be turned off without affecting other users. Additional security measure can also be added to the basic features.

A further advantage to the supplier is that such a disc, besides being an authorization vehicle, can be a good promoting and marketing tool for driving trials of a product or service. The disc can direct the end-user to the supplier's web site without the chance of the user mistyping the site URL.

Advantages to the user include that the information is easily accessed over a network connection, such as the Internet, while being locked to a particular user's authorizing disc that can restrict access of others to the same information. This is particularly important with personal information such as medical records, financial information, and so forth. Access to the content is portable; if the user wishes to access information while travelling, the user can bring the disc and use it on any computer equipped with an optical disc drive, such as CD-ROM drive, DVD reader, and so forth.
FIG. 1a is a plain view of an authorizing hybrid optical disc which allows copy protection in accordance with the present invention;
FIG. 1b shows a schematic diagram of a substitution scheme of encryption;
FIG. 1c shows a schematic diagram of a simple hiding scheme of encryption;
FIG. 1d shows a schematic diagram of a more complex hiding scheme of encryption;
FIG. 2 shows a method of forming a secure signature;
FIG. 3 is block diagram showing an embodiment of a method for making an authorizing hybrid optical disc for use in this invention;
FIG. 4 is a schematic diagram of the software technique to encrypt a client application in a non-copyable way;
FIG. 5 is a schematic diagram of the use of this invention to make an initial authorizing connection over a network connection;
FIG. 6 is a schematic diagram of how various software routines on different computers connected by a network interact to verify authenticity;
FIG. 7 is a schematic diagram showing the public keys available for encryption and their complementary private keys available for decryption and message signing;
FIG. 8 is a block diagram which shows how the public and private keys are used to create a secure channel for communication in the verification of the authenticity of the secure signature;
FIG. 9a is a block diagram showing an embodiment of a method by which the holder of the disc can access online information; and

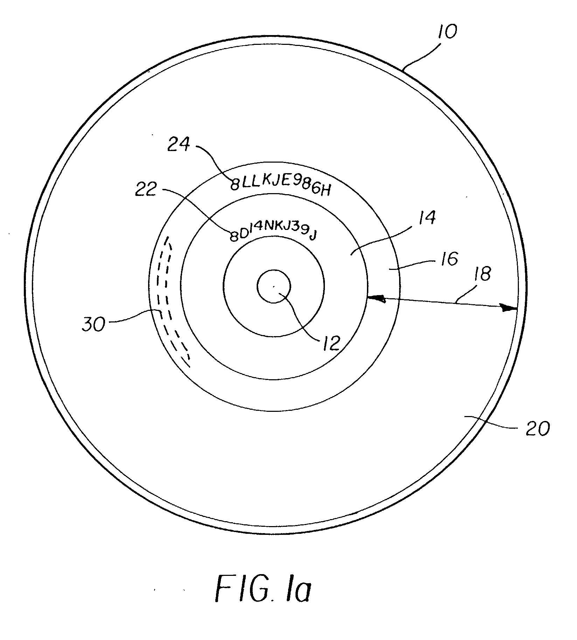

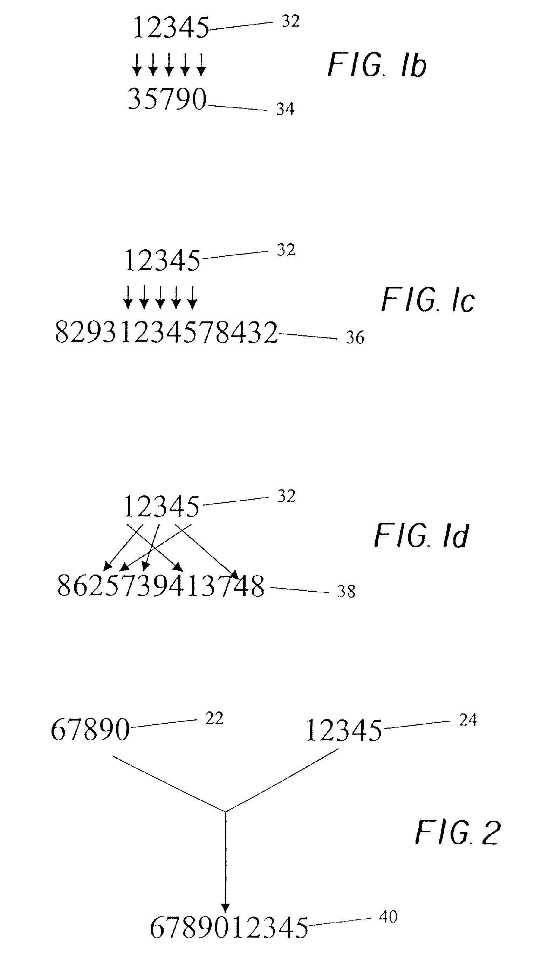

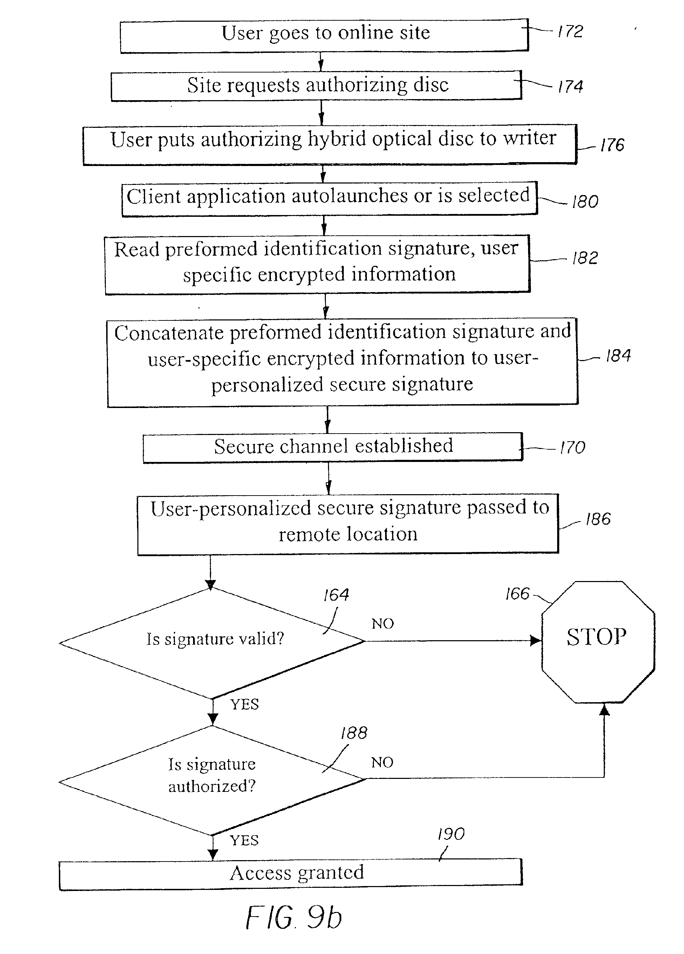

FIG. 9b is a block diagram showing another embodiment of a method by which the holder of the disc can access online information. Turning now to FIG. 1, we see a diagram of authorizing hybrid optical disc 10. Authorizing hybrid optical disc 10 is a hybrid optical disc; that is, it includes both a mastered pre-recorded area, also known as a ROM portion 14, and a recordable area, also known as a RAM portion 18. The authorizing hybrid optical disc 10 includes a center hole 12 for clamping and spinning. ROM portion 14 is a mastered session; that is, a master disc was created including supplied software or data in the first session, and was subsequently used―either directly or through intermediate "Father" and "Mother" discs―to stamp multiple uncustomized copies of the authorizing hybrid optical disc 10. Additional mastered sessions are also possible. RAM portion 18 can be of a write-once type (for example, CD-WO or CD-R) or a rewriteable type (for example, CD-RW), which can be written to by standard optical-disc writing techniques. Authorizing hybrid optical disc 10 also includes a preformed identification signature 22, which is a digital signal recorded during the mastering process and subsequently impressed into ROM portion 14 of each authorizing hybrid optical disc 10. Preformed identification signature 22 is recorded in such a way as to make it difficult for a pirate to copy. ROM portion 14 can include other information or programs that are common to all authorizing hybrid optical disc 10s of a given application.

In a part of RAM portion 18, a second session or written session 16 has been written by a content supplier or other authorized party prior to distribution. A content supplier is defined as a person or entity engaged in the production, sale, resale, or distribution of information content (for example, audio, video, text, data, and so forth) who wishes to use authorizing hybrid optical disc 10 to make access to said content available only to authorized end users. The content supplier maintains the information content in its own databases and provides access to information to end-users via a network (for example, the Internet). Written session 16 can be a third or later session if authorizing hybrid optical disc 10 already includes more than one session. Written session 16 includes a unique identification number or unique ID, also known as user-specific encrypted information 24 that is written in one or more known absolute sector addresses in an encrypted manner. User-specific encrypted information 24 serves to make each authorizing hybrid optical disc 10 unique for a specific user by virtue of the fact that each user-specific encrypted information 24 written to the authorizing hybrid optical disc 10 is a unique combination of binary digits. User-specific encrypted information 24 is also designed to be combined with preformed identification signature 22 to form a user-personalized secure signature.

In some embodiments, written session 16 can include other programs or information. For example, authorizing hybrid optical disc 10 can further include an encrypted client application package 30, which includes a client application to verify the authenticity of authorizing hybrid optical disc 10 in a secure way. Authorizing hybrid optical disc 10 can also include further writeable area 20, which is the as-yet-unwritten part of RAM portion 18.

By the term "written in an encrypted manner" we mean written in such a way that the contents are not clear to a reader who does not know how the data is stored. Turning now to FIG. 1b, 1c, and 1d, we see schematic diagrams of several example methods of encryption. FIG. 1b shows a substitution scheme in which the symbols of unique identification 32 are replaced, on an individual basis or in blocks, with other symbols or groups of symbols 34. FIG. 1c shows a simple hiding scheme in which unique identification 32 is hidden among a longer series of symbols 36. Its position and length must be known to effect decryption. FIG. 1d shows a more complex hiding scheme in which the symbols of unique identification 32 are scrambled, either individually or in groups, and hidden among a larger series of symbols 38. This invention can use one or more of these or other schemes to write user-specific encrypted information 24 in an encrypted manner to RAM portion 18 of authorizing hybrid optical disc 10.

Turning now to FIG. 2, we see one method of forming a user-personalized secure signature. Preformed identification signature 22 and user-specific encrypted information 24 are concatenated to provide user-personalized secure signature 40. User-personalized secure signature 40 can be an electronic "key" to access information. It can further include payment authorizing information (for example, the user's credit or debit card number in an encrypted form) that allows the user to transact business with a content supplier.

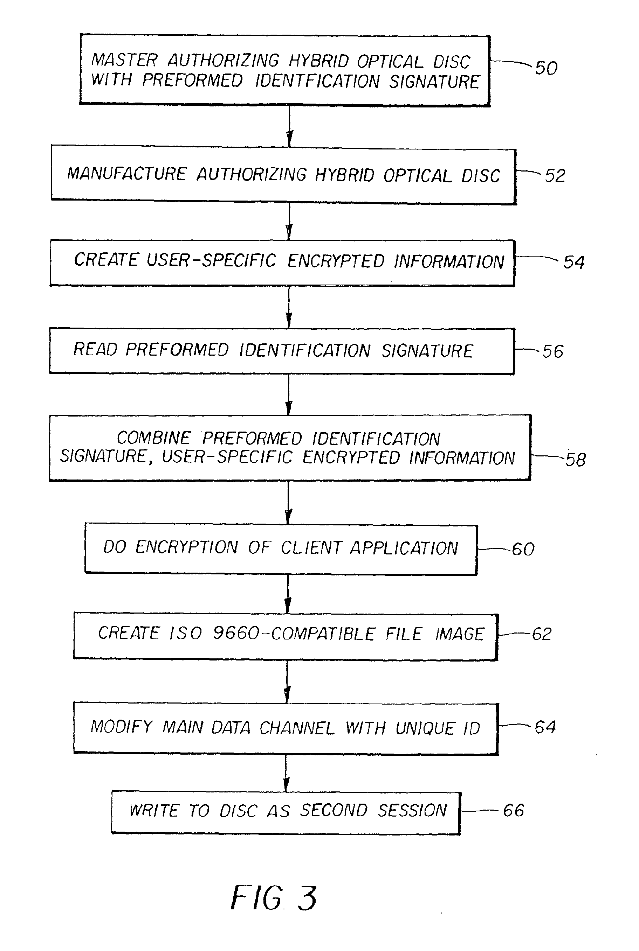

Turning now to FIG. 3, we see a block diagram of one method for making the authorizing hybrid optical disc 10 to be used in this invention. A hybrid optical disc 10 is mastered with preformed identification signature 22 in step 50, and then used to manufacture a set of authorizing hybrid optical discs 10 with the same preformed identification signature 22 in step 52. All succeeding information transfers to the authorizing hybrid optical disc 10 are by standard CD writer techniques. In step 54, user-specific encrypted information 24 is generated for an individual authorizing hybrid optical disc 10. Preformed identification signature 22 is read from the authorizing hybrid optical disc 10 (step 56) and concatenated with user-specific encrypted information 24 to form user-personalized secure signature 40, which also serves as the encryption key (step 58). User-personalized secure signature 40 is used to uniquely encrypt the client application 110 in step 60. Encrypted client application 78 is used to create an ISO 9660-compatible file image in step 62. The main data channel of the session is modified with the user-specific encrypted information 24 (step 64) and the entire package is written to authorizing hybrid optical disc 10 as written session 16 in RAM portion 18 (step 66).

Authorizing hybrid optical discs 10 can then be distributed in any manner (for example, mailed, distributed through stores, and so forth.) The method of distribution can be related to the final use. Some examples will help illuminate this. For example, a magazine wishing to give its subscribers access to a special webcast on the Internet can distribute an authorizing hybrid optical disc 10 with each mailed subscription copy. An educational facility that includes online educational content can distribute such a authorizing hybrid optical disc 10 to each student at registration. A corporation that needs to provide access to up-to-date information to representatives in the field can post the information on a private site and distribute the "keys" (authorizing hybrid optical discs 10) to the representatives via internal distribution channels. A for-profit provider of access to special events (a pay-for-view type of model) can sell authorizing hybrid optical discs 10 via distributors and media sales outlets.

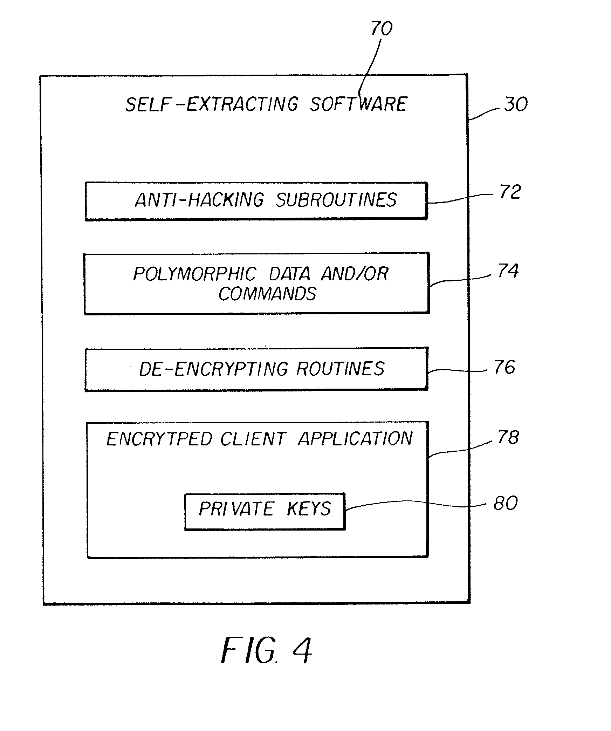

Turning next to FIG. 4, we see a diagram of one way that encrypted client application package 30 can be structured and written to authorizing hybrid optical disc 10 for use in this invention. Encrypted client application package 30 is a single executable program with the same name on the authorizing hybrid optical disc 10 as the original executable program. Encrypted client application package 30 includes self-extracting software 70 which runs first. It further includes anti-hacking routines 72 to check for the presence of hacking software in memory when the program is run. Such hacking software can include reverse-engineering programs, disassemblers, or software designed to capture a secure data stream and replay it at a later time (sometimes called "spoofing"). Encrypted client application package 30 can further include a section with polymorphic data and/or commands 74. Polymorphic code generally provides multiple paths which achieve the same results, but are constructed in such a way that a program follows a different path each time it executes. Polymorphic code is used to make the program more difficult to reverse-engineer. De-encrypting routines 76 are designed to use the data stored on authorizing hybrid optical disc 10 (specifically preformed identification signature 22 and user-specific encrypted information 24) to de-encrypt encrypted client application 78. Encrypted client application package 30 further includes a private keys area 80, which comprises a set of private encryption keys that are used to verify the authenticity and integrity of authorizing hybrid optical disc 10 in a secure manner by utilizing public key encryption.

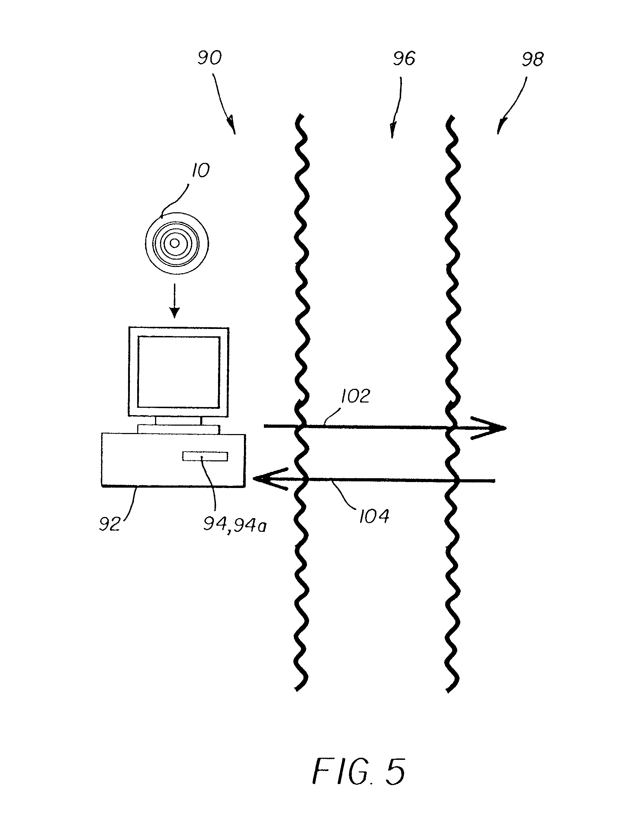

Turning now to FIG. 5, we see a schematic diagram of the use of this invention to make the initial authorizing connection over the Internet or other network 96. Personal computer 92, which includes optical disc reader 94 or optical disc reader/writer 94a and can be at the end-user's local site 90, is connected via the Internet or other network 96 to a remote location 98. To access authorized information, an end-user places his/her authorizing hybrid optical disc 10 into optical disc reader 94 (or optical disc reader/writer 94a) in personal computer 92. Information is transferred between authorizing hybrid optical disc 10 and remote location 98 via a secure connection whose nature will become evident. This information transfer can be either initiated by client application 110 on authorizing hybrid optical disc 10 (optical-disc-push operation 102) or by remote location 98 (web-pull operation 104).

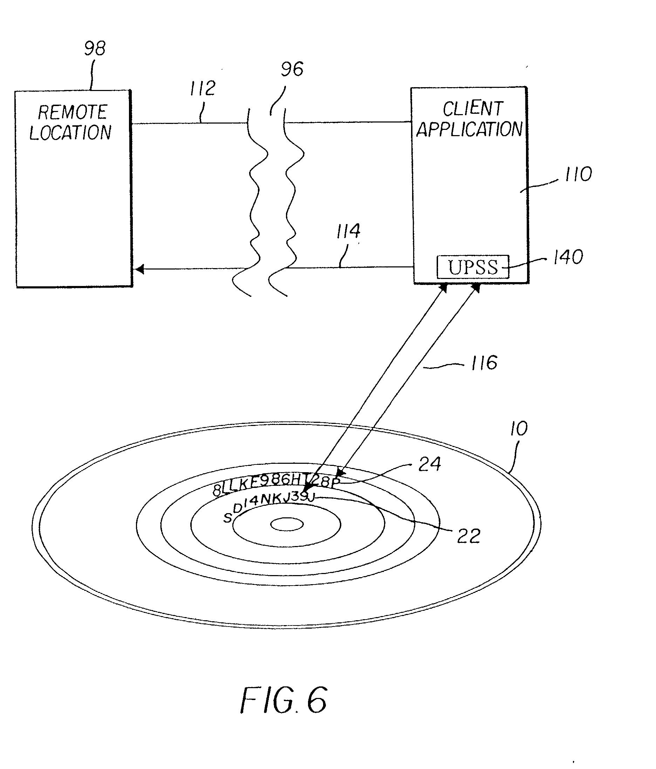

Turning now to FIG. 6, we see a schematic view of the way that user-personalized secure signature 40 is passed to remote location 98 in a secure manner in order to authenticate authorizing hybrid optical disc 10. This requires the use of a method that allows verification of the validity of authorizing hybrid optical disc 10 by remote location 98. Client application 110 runs on an end-user's computer system, which is physically remote from remote location 98, but is connected via the Internet or other network 96. Client application 110, which is originally encrypted on authorizing hybrid optical disc 10 as encrypted client application 78 within encrypted client application package 30, is designed to read preformed identification signature 22 and user-specific encrypted information 24 from authorizing hybrid optical disc 10 in data read step 116, and combine them into user-personalized secure signature 40. Remote location 98 sends a key request 112 to client application 110 for user-personalized secure signature 40. Included in key request 112 is a message to use one of a plurality of keys from private keys area 80 when answering the request. Client application 110 returns user-personalized secure signature 40 to remote location 98 in signed message 114 that has been signed with the selected private key. Remote location 98 possesses the public key corresponding to the chosen private key, and can verify the authenticity of client application 110, and therefore of authorizing hybrid optical disc 10. If authorizing hybrid optical disc 10 is authentic and user-personalized secure signature 40 is a signature which allows access to the online information, access can be granted by remote location 98. Access allows the user to communicate with the content supplier, select information (for example, events, concerts, and so forth) to access, transact business, and to access the desired information. Accessing information is also known as downloading in the sense that the information must be transferred from remote location 98 to the user's location. However, the information is not stored at the user's location.

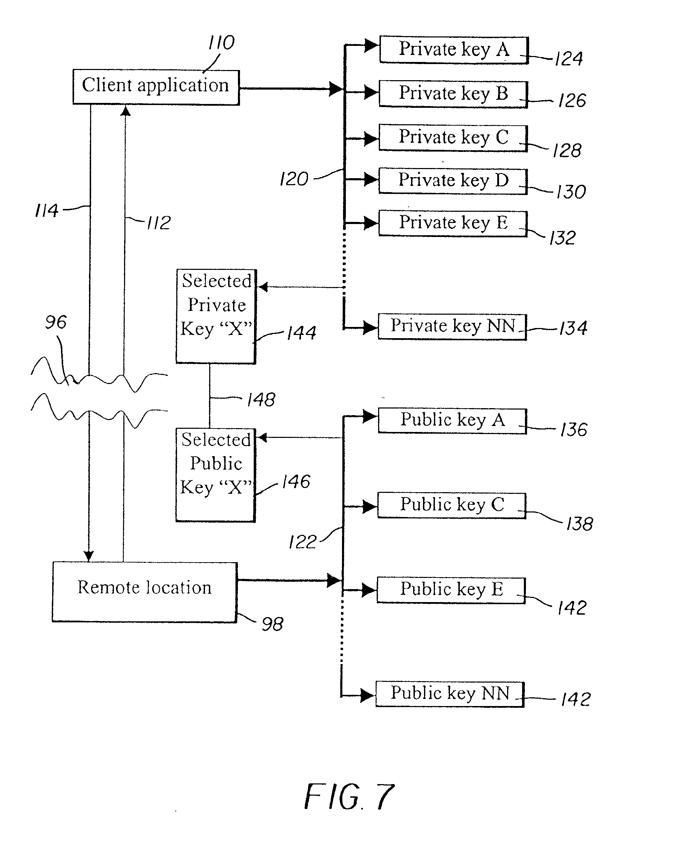

Turning now to FIG. 7, we see a schematic of the private keys available in private keys area 80, their corresponding public keys, and how they are used between remote location 98 and client application 110. Client application 110 has been provided with a private key series 120, which is stored in private keys area 80 of encrypted client application package 30. These private keys are capable of decrypting messages that have been encrypted with the corresponding public key, and they are also capable of signing messages in a secure way. For example, private key 124 (other private keys 126, 128, 130, 132 and 134 are also shown) can decrypt messages that have been encrypted with public key 136 (other private keys 138, 140 and 142 are also shown). Public key 136 can check the authenticity of messages signed by private key 124. Remote location 98 includes a public key series 122 of public keys corresponding to the private keys in private key series 120. Public key series 122 can include the entire set of keys corresponding to private keys series 120, or can be a subset thereof. The latter arrangement allows certain keys to be maintained exclusively for one application or one vendor without modifying the client application. If the security of any key is compromised, that particular key can be removed from remote location 98, and the security breach is thereby closed.

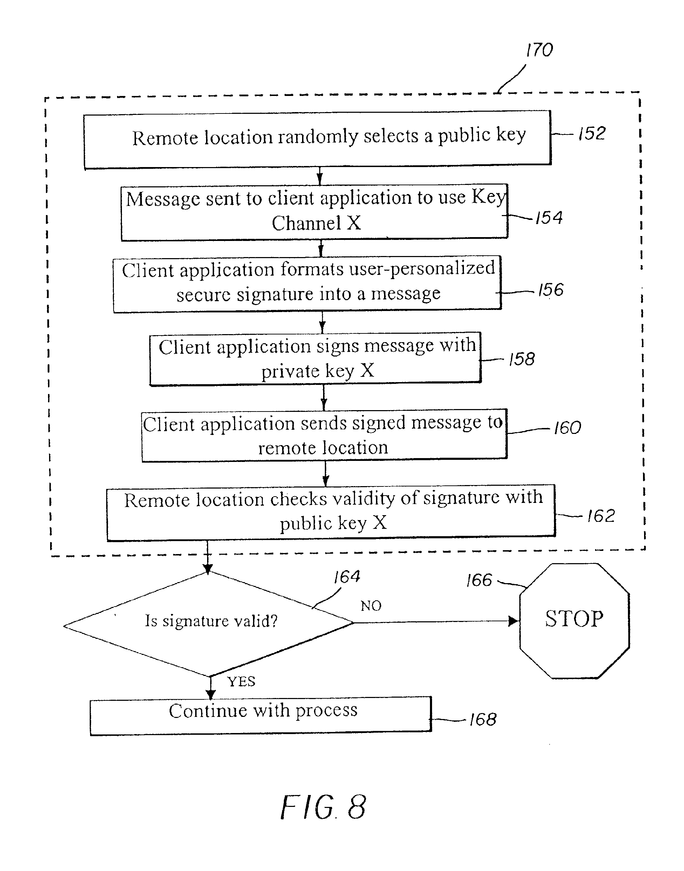

Remote location 98 randomly selects a public key "X" from public key series 122, making it selected public key 146. Remote location 98 sends key request 112 to client application 110 and indicates in key request 112 which key has been selected to be selected public key 146. Client application 110 selects the corresponding private key from private key series 120 to give the selected private key 144. The selected public key 146/selected private key 144 pair form public/private key channel 148. Client application 110 uses selected private key 144 to sign signed message 114 that is sent to remote location 98. Turning now to FIG. 8, we see a block diagram showing more details of the secure method for transmitting user-personalized secure signature 40. In step 152, remote location 98 randomly chooses selected public key 146 from public key series 122. In step 154, remote location 98 sends key request 112 to client application 110 to use public/private key channel 148 (that is the random key it has selected). Client application 110 formats user-personalized secure signature 40 into a message (step 156) which it then signs with selected private key 144 (step 158). Client application 110 then sends signed message 114 to remote location 98 (step 160). Remote location 98 receives signed message 114 and uses selected public key 146 to verify signed message 114 (step 162). If signed message 114 is not valid (step 164), the process stops (step 166). If signed message 114 is valid, the process can continue (step 168).

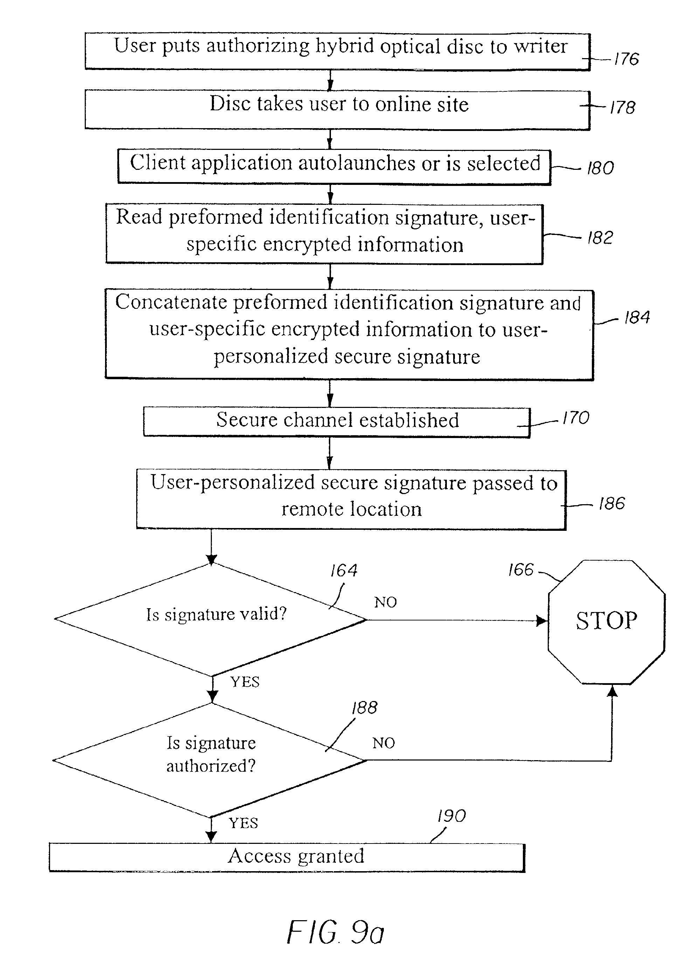

Turning now to FIG. 9a, we see a method by which the user, who is the holder of the authorizing hybrid optical disc 10, can access online information that has been authorized. The content supplier's remote location 98 can be accessible via a channel (for example, a network, the Internet, and so forth) to which the user connects. The user places authorizing hybrid optical disc 10 into optical disc reader 94 or optical disc reader/writer 94a in step 176. Authorized hybrid optical disc 10 can be encoded with the address of remote location 98 in the form of a link that connects the user to remote location 98, either automatically or by the user clicking on a link (step 178). This removes the possibility of user error in typing a network address. In step 180, client application 110 autolaunches or is launched by the website or the authorizing hybrid optical disc 10. Client application 110 reads preformed identification signature 22 and user-specific encrypted information 24 (step 182) and concatenates them into user-personalized secure signature 40, which also serves as the decryption key (step 184). A secure channel is established between client application 110 and remote location 98 (step 170, elaborated in greater detail in FIG. 8) and user-personalized secure signature 40 is provided to remote location 98 in step 186. In step 164, if remote location 98 determines that user-personalized secure signature 40 is invalid (for example, a counterfeit disc or a pirated user-personalized secure signature), or if it is missing, the process stops (step 166). If user-personalized secure signature 40 is valid, remote location 98 then checks if user-personalized secure signature 40 is authorized to access the information in step 188. If user-personalized secure signature 40 is not authorized to access the information (for example, the user is attempting to access this month's webcast with the authorizing hybrid optical disc for last month's webcast), the process stops (step 166). If the signature is authorized to access the information, access is granted in step 190.

Turning now to FIG. 9b, we see another method by which the user, as the holder of the authorizing hybrid optical disc 10, can access online information that has been authorized. The content supplier's remote location 98 can be accessible via a channel (for example, a network, the Internet, and so forth) to which the user connects. In step 172, the user connects to the Internet or another network and goes to the appropriate website. The user can type in the address (for example, an Internet URL) of the content supplier. In step 174, the website requests that the user insert the authorizing hybrid optical disc 10. The user places authorizing hybrid optical disc 10 into optical disc reader 94 or optical disc reader/writer 94a in step 176. In step 180, client application 110 autolaunches or is launched by remote location 98 or authorizing hybrid optical disc 10. Client application 110 reads preformed identification signature 22 and user-specific encrypted information 24 (step 182) and concatenates them into user-personalized secure signature 40, which also serves as the decryption key (step 184). A secure channel is established between client application 110 and remote location 98 (step 170, elaborated in greater detail in FIG. 8) and user-personalized secure signature 40 is provided to remote location 98 in step 186.

In step 164, if remote location 98 determines that user-personalized secure signature 40 is invalid (for example, a counterfeit disc or a pirated user-personalized secure signature), or if it is missing, the process stops (step 166). If user-personalized secure signature 40 is valid, remote location 98 then checks if user-personalized secure signature 40 is authorized to access the information in step 188. If user-personalized secure signature 40 is not authorized to access the information (for example, the user is attempting to access this month's webcast with the authorizing hybrid optical disc for last month's webcast), the process stops (step 166). If user-personalized secure signature 40 is authorized to access the information, access is granted in step 190.

This invention allows a high degree of control over remote access to research, private text and pictures, messages, and much more. This invention and its degree of control over remote access can be further illustrated with some examples.

**Example 1.** A fashion magazine, as part of its ongoing effort to encourage its readers to subscribe, wishes to offer its subscribers access to a special "runway" fashion show that will be available to be viewed on the Internet at remote location 98. The magazine can do this by including an authorizing hybrid optical disc 10 in subscribers' copies of an issue. In this case, authorizing hybrid optical disc 10 includes preformed identification signature 22 and user-specific encrypted information 24. These two IDs, and the above-described authentication procedure using client application 110, allow remote location 98 to verify that authorizing hybrid optical disc 10 is authentic (for example, not pirated) and authorizing (for example, a correct key for this show). This allows the subscriber to connect to and view the fashion show. User-specific encrypted information 24 can be the same for each authorizing hybrid optical disc 10. The key advantage is that the combination of preformed identification 22 and user-specific encrypted information 24 makes the authorizing hybrid optical disc 10 very difficult to duplicate and easy to verify the authenticity. The magazine thus can restrict numerous non-authorized viewers from accessing the show, if that is the desire. Once the authorizing hybrid optical disc 10s are distributed, the magazine can also use them for future promotions, special events, and so forth.

**Example 2**. An educational facility wishes to provide its students with access to online information at the facility's remote location 98. This information can include supplemental course information, student guides, access to the student's records, and even the ability to take exams online. The facility provides each student with an authorizing hybrid optical disc 10 that includes preformed identification signature 22 and user-specific encrypted information 24. User-specific encrypted information 24 is unique for each student. These two IDs, and the above-described authentication procedure using client application 110, allow remote location 98 to verify that authorizing hybrid optical disc 10 is authentic (for example, not pirated) and authorizing (for example, a key for a certain student). This allows the student to connect to and view general information. Because the authorizing hybrid optical disc 10 is keyed to a particular student, the student can be granted access to his/her academic records (but not to others'), and to supplemental information for the courses registered (but be excluded from others they are not registered for). Advantages include the ability to allow students easy access to their own records, but not be allowed to view other's information. Another advantage is the ability to make materials available to registered students but not to others. Thus, the facility can be assured of staying within the educational "fair-use" area of copyright law.

**Example 3**. A company wishes to make new sales information available immediately to its field representatives and through them to its customers. The company provides remote location 98 that requires authentication for viewing the sales information. The company gives each of its representatives an authorizing hybrid optical disc 10 that includes preformed identification signature 22 and user-specific encrypted information 24. User-specific encrypted information 24 is unique for each representative. These two IDs, and the above-described authentication procedure using client application 110, allow remote location 98 to verify that authorizing hybrid optical disc 10 is authentic (for example, not pirated) and authorizing (for example, a key for a certain representative). This allows the representative to connect to and view the most recent sales information. The representative can visit a customer or potential customer and, by the use of his authorizing hybrid optical disc 10, provide the customer access to the recent sales information during the visit. The multiple layers of authentication and piracy checking mean that an unscrupulous customer cannot make a pirated copy of authorizing hybrid optical disc 10 during the visit, nor use other methods to obtain the information and later emulate authorizing hybrid optical disc 10. Because the authorizing hybrid optical disc 10 is keyed to a particular representative, access can be turned off for a lost authorizing hybrid optical disc 10 without affecting the other representatives in the field. Advantages are that a company representative can show new and even potentially restricted information (for example, new product introductions for the coming months) over a network connection while retaining control over who can view that information.

**Example 4.** A company which promotes popular events (for example, concerts, sporting events) wishes to make an event available to paying viewers in many locations. It does this by providing remote location 98 that requires authentication for viewing the event. The promoting company creates authorizing hybrid optical discs 10 that include preformed identification signature 22 and user-specific encrypted information 24. User-specific encrypted information 24 can be unique for each authorizing hybrid optical disc 10 or can be the same. These two IDs, and the above-described authentication procedure using client application 110, allow remote location 98 to verify that authorizing hybrid optical disc 10 is authentic (for example, not pirated) and authorizing (for example, a key for a given event). The promoting company then makes authorizing hybrid optical discs 10 available for sale to the public through chosen retail outlets or as a cross-promotion with another entity (for example, an online music store). This allows a customer to buy or otherwise obtain an authorizing hybrid optical disc 10 and to connect to and view the event. The multiple layers of authentication and piracy checking mean that unscrupulous customers are discouraged from making pirated copies of authorizing hybrid optical disc 10. Making all copies of authorizing hybrid optical disc 10 with the same user-specific encrypted information 24 would lower the production cost, while making each authorizing hybrid optical disc 10 unique would give enhanced anti-piracy techniques. For example, if a pirate manages to copy a disc, remote location 98 can shut that off upon realizing that more than one customer is gaining access with the same user-personalized secure signature 40.

Another advantage of making each disc unique is that the user can use it to access future events. The user does this by making payment for the additional access via any normal means of payment over a network (for example, credit card payment over the Internet). The user can transfer a payment number (for example, a debit or credit card number) which authorizes a predetermined payment amount to
the content supplier from the user's bank or other commercial institution. The promoting company then gives the user access to one or more events or content selections that the user has selected. For each access, the same authorizing hybrid optical disc 10 serves as the user's "key" to access the event.

**Example 5**. A bank wishes to give customers convenient access to their banking information. However, the bank must be very careful that no one else can get access to that customer's information, nor that particular customer get access to any other customer's information. The bank provides remote location 98 that requires authentication for viewing the customer information. The bank provides its customers with an authorizing hybrid optical disc 10 that includes preformed identification signature 22 and user-specific encrypted information 24. User-specific encrypted information 24 is unique for each customer. These two IDs, and the above-described authentication procedure using client application 110, allow remote location 98 to verify that authorizing hybrid optical disc 10 is authentic (for example, not pirated) and authorizing (for example, a key for a certain customer). This allows the customer to connect to and view his/her banking information, but not to access information belonging to anyone else. The multiple layers of authentication and piracy checking mean that someone cannot easily make a pirated copy of authorizing hybrid optical disc 10, nor easily use other methods to obtain the information and emulate authorizing hybrid optical disc 10. Because the authorizing hybrid optical disc 10 is keyed to a particular customer, access can easily be turned off at remote location 98 for a lost authorizing hybrid optical disc 10 or a closed account. Additional security measures of the "what you know" type can be built in, such as the use of a PIN or user-selected personal information to allow authorizing hybrid optical disc 10 to access remote location 98.

**Example 6**. A hospital wishes to make patient in-hospital records available to the primary care physicians of those patients. The hospital provides remote location 98 that requires authentication for viewing the patient information. The hospital gives each doctor an authorizing hybrid optical disc 10 that includes preformed identification signature 22 and user-specific encrypted information 24. User-specific encrypted information 24 is unique for each doctor. These two IDs, and the above-described authentication procedure using client application 110, allow remote location 98 to verify that authorizing hybrid optical disc 10 is authentic (for example, not pirated) and authorizing (for example, a key for a given doctor). This allows the doctor to connect to and view patient information for his patients only. The multiple layers of authentication and piracy checking mean that someone cannot easily make a pirated copy of authorizing hybrid optical disc 10, nor use other methods to obtain the access information and emulate authorizing hybrid optical disc 10. Because the authorizing hybrid optical disc 10 is keyed to a particular doctor, access can be turned off for a lost authorizing hybrid optical disc 10 without affecting other doctors.

**Example 7.** A financial services company wishes to make additional services available to customers who have joined a "preferred services" group. These services can be for example, additional access to personal financial information, special analysis of important financial sectors of the economy and what it means to the individual investor, research that has been done by the financial services company, and so forth. The company must be very careful that no one else can get access to that customer's information, nor that particular customer get access to any other customer's information. The financial services company provides remote location 98 that requires authentication for viewing the customer information. The company provides its preferred customers with an authorizing hybrid optical disc 10 that includes preformed identification signature 22 and user-specific encrypted information 24. User-specific encrypted information 24 is unique for each customer and can include information (for exampl.e, the customer's name) that makes the use of authorizing hybrid optical disc 10 a personalized experience for the customer. The two IDs, and the above-described authentication procedure using client application 110, allow remote location 98 to verify that authorizing hybrid optical disc 10 is authentic (for example, not pirated) and authorizing (for example, a key for a certain customer). This allows the customer to connect to and view personal information and other added services, but not to access information belonging to anyone else. The multiple layers of authentication and piracy checking mean that someone cannot easily make a pirated copy of authorizing hybrid optical disc 10, nor easily use other methods to obtain the information and emulate authorizing hybrid optical disc 10. Because the authorizing hybrid optical disc 10 is keyed to a particular customer, access can easily be turned off at remote location 98 for a lost authorizing hybrid optical disc 10 or a closed account. Additional security measures of the "what you know" type can be built in, such as the use of a PIN or user-selected personal information to allow authorizing hybrid optical disc 10 to access remote location 98.

**Example 8**. A map generation service wishes to provide maps that customers worldwide can request over the Internet. It does this by providing remote location 98 that requires authentication for ordering the map. The service creates authorizing hybrid optical discs 10 that include preformed identification signature 22 and user-specific encrypted information 24. User-specific encrypted information 24 is unique for each authorizing hybrid optical disc 10. These two IDs, and the above-described authentication procedure using client application 110, allow remote location 98 to verify that authorizing hybrid optical disc 10 is authentic (for example, not pirated) and authorizing (for example, a key for accessing the map-generation service). The service then makes authorizing hybrid optical discs 10 available for sale to the public, either through chosen retail outlets or some other way, such as ordering over the Internet. This allows a customer to buy an authorizing hybrid optical disc 10 for a chosen number of maps, connect to remote location 98, and create the map. The multiple layers of authentication and piracy checking mean that unscrupulous customers are discouraged from making pirated copies of authorizing hybrid optical disc 10. Making each authorizing hybrid optical disc 10 unique allows the service to keep track of how many maps were paid for and how many have been generated to date.

## Claims

1. A method of transferring information from a content supplier from one or more databases, such information including program(s), audio, still, data files, or video, or combinations thereof to a remote location that uses an authorizing hybrid optical disc that permits the use of such transferred information, comprising the steps of:
(a) providing an authorizing hybrid optical disc having a ROM portion and a RAM portion;
(b) providing the ROM portion to include a preformed identification signature which is impressed into the ROM portion of the disc and is arranged to be difficult for a pirate to copy;
(c) providing the RAM portion which includes user-specific encrypted information which personalizes the optical disc for that specific user and in combination with the ROM preformed identification signature provides a user-personalized secure signature;
(d) a content supplier authenticating a user using the user-personalized secure signature so as to permit a user to communicate over a network with the content supplier and the user selecting information desired to be downloaded; and
(e) downloading the selected information to the user's memory location for use by the user.

2. The method of claim 1 further including permitting an authenticated user to communicate with the content supplier to transact business with the content supplier.

3. The method of claim 1 wherein a channel is used to communicate with the remote location via a network and wherein the hybrid disc is encoded with the address of the remote location.

4. The method of claim 3 wherein the channel is the Internet.

5. The method of claim 1 wherein the user-personalized secure signature includes payment authorizing information.

6. The method of claim 1 further including the step of a user making payment via the network for the transfer of the selected information.

7. The method of claim 6 wherein payment is provided by a user by transferring a payment number which can be used for transferring a predetermined payment amount from a commercial institution that can be for an amount of access to be selected by the holder of the hybrid optical disc.
